**Europäisches Patentamt**

**European Patent Office**

**Office européen des brevets**

(11) Veröffentlichungsnummer : **0 013 746**
**B1**

(19)

(12) # EUROPÄISCHE PATENTSCHRIFT

(45) Veröffentlichungstag der Patentschrift :
**17.10.84**

(51) Int. Cl.³ : **B 23 B 33/00, B 23 B 31/19**

(21) Anmeldenummer : **79105246.7**

(22) Anmeldetag : **18.12.79**

(54) Vorrichtung zum Einspannen von Werkstücken.

(30) Priorität : **23.12.78 DE 2856037**

(43) Veröffentlichungstag der Anmeldung :
**06.08.80 Patentblatt 80/16**

(45) Bekanntmachung des Hinweises auf die Patenterteilung : **17.10.84 Patentblatt 84/42**

(84) Benannte Vertragsstaaten :
**CH FR GB SE**

(56) Entgegenhaltungen :
**CH-A- 121 387**
**DE-C- 605 632**
**FR-A- 1 576 392**
**FR-A- 2 073 190**
**US-A- 2 067 107**
**US-A- 2 784 977**
**US-A- 4 083 271**

(73) Patentinhaber : **Naxos-Union Schleifmittel und Schleifmaschinenfabrik**
**Wächtersbacher Strasse 83**
**D-6000 Frankfurt am Main (DE)**

(72) Erfinder : **Russ, Peter**
**Schumannstrasse 18/D-4019 Monheim/DE**
**D-4019 Monheim (DE)**

(74) Vertreter : **Keil, Rainer A.; Dipl.-Phys. Dr. et al**
**Patentanwälte KEIL & SCHAAFHAUSEN Ammelburg-strasse 34**
**D-6000 Frankfurt am Main 1 (DE)**

**Beschreibung**

Die Erfindung betrifft eine Vorrichung zum Einspannen von Werkstücken gemäß dem Oberbegriff des Anspruches 1.

Eine solche Spannvorrichtung für Kurbelwellen ist bekannt (US-A 2 067 107). Diese Spannvorrichtung enthält eine auswechselbare Werkstückauflage, auf der der Zapfen der Kurbelwelle durch Klemmbacken festgeklemmt wird und weitere Klemmbacken zum Festklemmen des Gegengewichts der Kurbelwelle. Die Klemmbacken für den Zapfen der Kurbelwelle, im dargestellten Ausführungsbeispiel zwei Klemmbacken, sind jeweils um die Achse einer in der Spannvorrichtung gelagerten Welle drehbar. Eine Klemmechanik wirkt auf die beiden Klemmbacken so ein, daß diese zum Festklemmen des Kurbelzapfens auf diesen zu und im umgekehrten Fall von diesem weg gedreht werden. Bestandteile der Klemmechanik ist ein von einer Druckquelle, z. B. Luftdruckquelle, beaufschlagbarer Zylinder sowie Kolben, Gelenke und Gelenkhebel. Zur Ausrichtung einer festgeklemmten Kurbelwelle ist eine von Hand betätigbare Drehmechanik mit Zahnstange vorgesehen. Beim Verdrehen des Handgriffs wird ein am Ende der Zahnstange angeordneter Zapfen in eine Bohrung der Kurbelwelle hinein- oder herausverschoben.

Der Aufwand zur Erzeugung eines geregelten Drucks und damit für eine einstellbare Klemmkraft der beiden Klemmbacken ist relativ hoch. Die Kraftübertragung von der Kolbenstange auf die beiden Klemmbacken erfolgt über Gelenkhebel, welche in Aussparungen des Kolbens und der Klemmbacken geführt sind. Infolge von Verschleiß der Lagerstellen ist eine zwangsläufig gleich hohe Klemmung jeweils zwischen Klemmbacken und Zapfen der Kurbelwelle nicht gewährleistet. Um dem zu begegnen, ist als zusätzlicher Aufwand der kraftbetätigte Formschluß zwischen Zapfen der Zahnstange und Bohrung der festgeklemmten Kurbelwelle erforderlich.

Eine weitere Spannvorrichtung ist bereits bekannt (DE-B 21 10 469). Sie ist in einem Spindelstock gelagert. Zur Aufnahme und zum Einspannen des Werkstückes weist sie eine Werkstückauflage und einen durch einen Hydraulikkolben verschwenkbaren Einspannarm auf, der über einen mit einer ebenen Spannfläche versehenen Klemmbacken gegenüber der Werkstückauflage am Werkstück bzw. am endseitigen Kurbelwellenzapfen eingreift und so das Werkstück festhält. Da die Vorrichtung haupts-ächlich für Kurbelwellenschleifmaschinen bestimmt ist, spannt man beide endseitigen Kurbelwellenzapfen in je eine Vorrichtung ein.

Als nachteilig bei der bekannten Vorrichtung muß gewertet werden, daß zur Betätigung des hydraulischen Kolbens ein erheblicher Aufwand an hydraulischen und elektrischen Steuergliedern erforderlich ist, und daß der eine, das Werkstück festspannende Klemmbacken eine ebene Spannfläche aufweist sowie keine bestimmte Vorspannung hat. Durch die geringe Angriffsfläche kommt es immer wieder vor, daß sich das Werkstück, das in einer genauen Lage eingespannt werden muß, während der Bearbeitung verdreht. Da alle Betätigungteile praktisch freiliegen, ist außerdem laufend eine entsprechende Wartung erforderlich.

Aufgabe der vorliegenden Erfindung ist es, eine Vorrichtung der eingangs beschriebenen Art dahingehend weiterzuentwickeln, daß die genannten Nachteile vermieden werden, d. h. daß sie stabil in ihrem Aufbau und weitgehend wartungsfrei ist, ein vereinfachtes Festspannen des Werkstückes erlaubt, und daß keine elektrischen oder hydraulischen Zuführungsleitungen erforderlich sind.

Nach der Erfindung wird die Aufgabe durch die Kennzeichnenden Merkmale des Anspruchs gelöst.

Durch die Anordnung von zwei Klemmbacken und einer Werkstückauflage ist eine sichere Einspannung des Werkstückes gegeben, die noch verbessert wird, indem die an dem Werkstück zur Auflage kommenden Flächen genau der Form des einzuspannenden Werkstückes angepaßt sind. Dies ist leicht möglich, weil die Teile von außen zugängig und zudem auswechselbar sind. Da das Einspannen durch die Gewindespindel von Hand oder durch einen aufsetzbaren Antrieb erfolgt, sind keinerlei Zuführungsleitungen erforderlich, und nachdem nahezu alle Übertragungsmittel bzw. Antriebsteile für die Einspannarme in einem geschlossenen, mit Öl gefüllten Raum untergebracht sind, ist der Verschleiß gering und eine Wartung entfällt weitgehend. Außerdem ist die Vorrichtung stabil in ihrem Aufbau und weist eine bestimmte Vorspannkraft zum Einspannen des Werkstückes auf.

Die beiden Klemmbacken und die Werkstückauflage werden dabei so angeordnet, daß sie etwa gleichmäßig über den Umfang des einzuspannenden Werkstückes verteilt sind. Zwischen den Enden der beiden Einspannarme wird aus Sicherheitsgründen zweckmäßigerweise eine die Schließlage der Klemmbacken anzeigende Schließlehre vorgesehen.

Weiter wird nach der Erfindung vorgeschlagen, daß die an jeder Welle im abgeschlossenen Raum befestigten Übertragungsmittel aus einem mit einem Hebelarm verbundenen, federnd ausgebildeten Spannelement und einem an einem zweiten Hebelarm angebrachten Anlaufstück bestehen. Führungsflächen des Spannelementes und des Anlaufstückes verlaufen dabei in einem spitzen Winkel zueinander und zwischen den beiden Führungsflächen ist eine drehbar an der Mutter befestigte Bedienungsrolle vorgesehen. Durch Verschieben der Mutter verschiebt sich auch die Bedienungsrolle, so daß sie abwechselnd mit je einer der Bedienungsflächen zusammenarbeitet. Der Hebelarm des Spannelementes und der Hebelarm des Anlaufstückes werden dabei zweckmäßigerweise als ein auf der Welle befestigter Winkelhebel ausgebildet.

Das Spannelement besteht erfindungsgemäß aus einem topfförmigen Teil, einem in dem topfförmigen Teil längsverschiebbar geführten Kolben und den Kolben und damit die Führungsfläche des Spannelementes nach außen drückenden Federelementen, wobei die Federelemente vorzugsweise Tellerfedern sind, die zwischen einer Anschlagfläche am Kolben und der Stirnfläche des topfförmigen Teiles um den Kolben herum angeordnet werden.

Als Weiterbildung der Erfindung wird vorgeschlagen, die Gewindespindel in radialer Richtung im abgeschlossenen Raum des Spannkopfkörpers anzuordnen und außerhalb des Spannkopfkörpers einen Vierkant an ihr anzubringen, so daß sie mittels eines Schlüssels von Hand oder eines aufsetzbaren Antriebes gedreht werden kann. Bei Verwendung eines Antriebes sind an diesem Grenztaster bzw. Grenzanschläge zum Begrenzen der Vorspannkraft für das Spannelement sowie des maximalen Schwenkweges für das Anlaufstück vorgesehen.

Schließlich wird erfindungsgemäß noch vorgeschlagen, außerhalb an der dem Werkstück zugekehrten Stirnfläche des Spannkopfkörpers an diesen Planflächen zum Befestigen von Anschlägen und Lehren anzubringen.

An der dem Teilkopf bzw. Spindelstock zugewandten Stirnfläche weist der Spannkopfkörper einen den öldichten Raum fest abschließenden Deckel auf, der in einer Zentrierung geführt und durch eine Paßfeder gegen Drehen gesichert ist. Die freie Stirnfläche des Deckels ist dann dem Antriebsteil angepaßt.

Abschließend sei noch erwähnt, daß auch hier beispielsweise zur Bearbeitung von mehrhubigen Kurbelwellen jeder endseitige Kurbelsellenzapfen in eine Vorrichtung gemäß der Erfindung eingespannt wird, wodurch eine genaue Bearbeitung sichergestellt ist.

Weitere Einzelheiten der Erfindung können der nachfolgenden Beschreibung eines in den Zeichnungen dargestellten Ausführungsbeispieles entnommen werden. Es zeigen :

Figur 1 eine Ansicht der erfindungsgemäßen Vorrichtung von der Einspannseite des Werkstückes aus gesehen,

Figur 2 einen Schnitt II-II durch die Vorrichtung nach Fig. 1,

Figur 3 einen Schnitt III-III durch die Vorrichtung nach Fig. 2,

Figur 4 einen Schnitt IV-IV durch die Vorrichtung nach Fig. 1.

In allen Fig. sind die gleichen Teile mit den gleichen Bezugszeichen versehen, wobei jeweils nur die erfindungswesentlichen Teile bezeichnet sind.

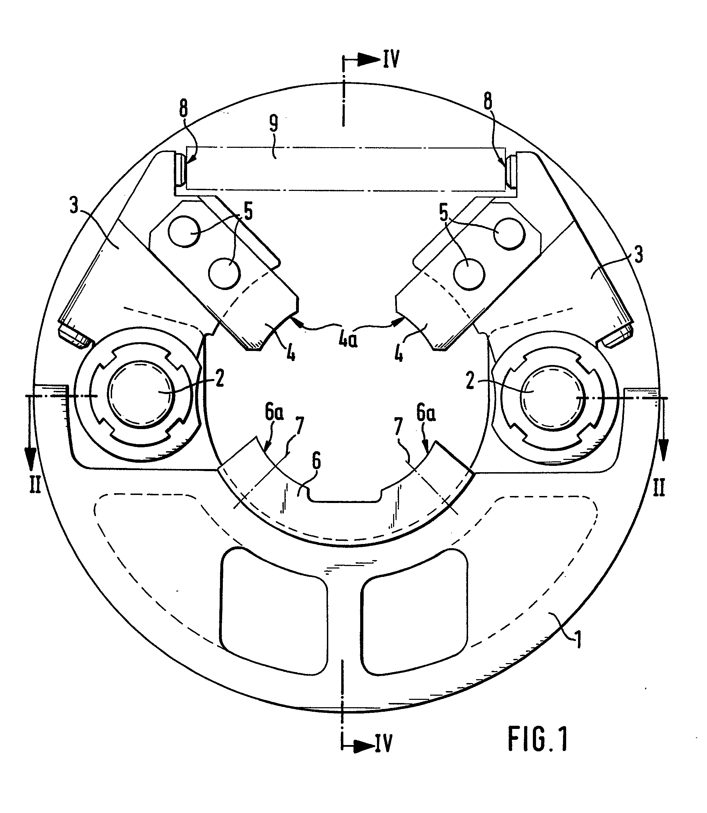

In Fig. 1 sind durch einen runden Spannkopfkörper 1 zwei Wellen 2 in Richtung der Einspannstelle für das nicht dargestellte Werkstück nach außen geführt. An den freien Enden der Wellen 2 ist, vorzugsweise durch ein Polygonprofil, gegen Verdrehen gesichert, je ein Einspannarm 3 befestigt, an dem jeweils ein in radialer Richtung zur Mitte des Spannkopfkörpers 1 verlaufender Klemmbacken 4 durch Schrauben 5 auswechselbar angebracht ist. In gleicher Ebene mit den Klemmbacken 4 befindet sich am unteren Teil des Spannkopfkörpers 1 eine durch, in der Zeichnung nur angedeutet, Schrauben 7 ebenfalls auswechselbar befestigte Werkstückauflage 6. Die Klemmbacken 4 und die Werkstückauflage 6 sind über den Umfang gesehen so aufgeteilt, daß eine gleichmäßige Einspannung des Werkstückes, nämlich jedem Klemmbacken 4 ein Teil der Werkstückauflage 6 gegenüberliegen, erfolgt, wobei die am Werkstück zur Anlage kommenden Flächen 4a, 6a zum Erreichen einer festen Halterung jeweils der Form des zu bearbeitenden Werkstückes angepaßt sind. Durch gegensinniges Verschwenken der beiden Einspannarme 3 kann das Werkstück eingespannt oder freigegeben werden. Um eine gute Einspannung zu erzielen, ist im Beispiel zwischen zwei Anschlägen 8 der Einspannarme 3 noch eine Schließlehre 9 vorgesehen.

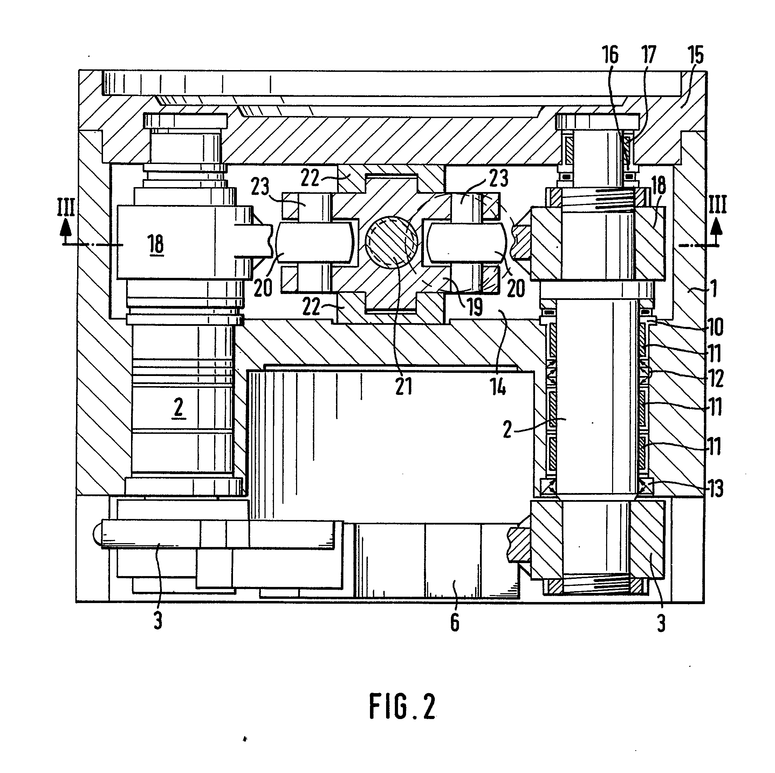

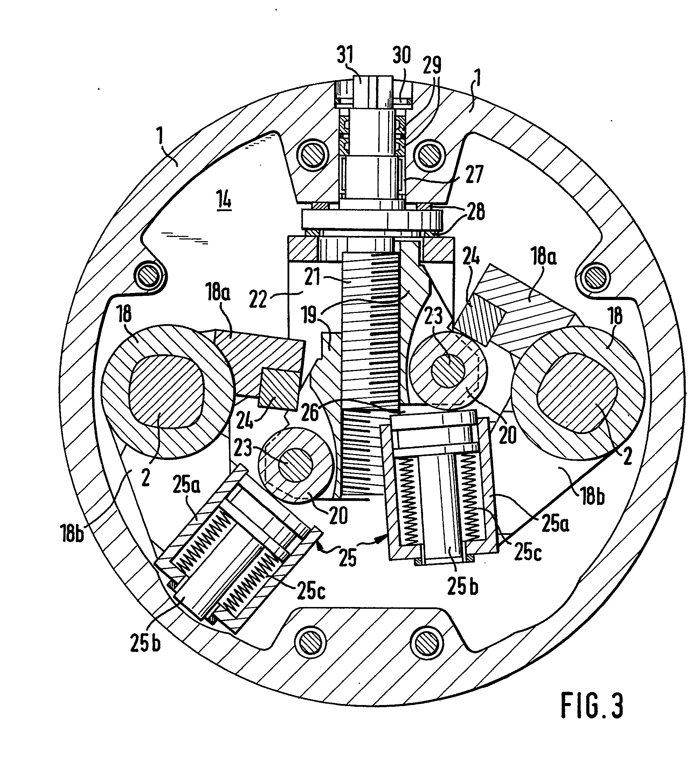

Aus Fig. 2 ist zu erkennen, daß die Wellen 2 durch ein Axiallager 10 und durch Radiallager 11 im Spannkörper 1 gelagert sind. Dichtungen 12, 13 verhindern einen Durchtritt von Öl auf die das Werkstück aufnehmende Stirnfläche. Im Spannkopfkörper 1 ist nämlich ein Raum 14 vorgesehen, der durch einen Deckel 15 öldicht abgeschlossen und mit solchem gefüllt wird. In dem Deckel 15 sind die Wellen 2 durch je ein weiteres Axiallager 16 und ein Radiallager 17 geführt. Im öldicht abgeschlossenen Raum 14 sind auf den Wellen 2, wie unter Fig. 3 genau beschrieben wird, je ein Winkelhebel 18 drehsicher befestigt. Jeder Winkelhebel 18 ist mit Übertragungsmitteln versehen, die mit einer in einer Mutter 19 durch eine Achse 23 drehbar gelagerten Bedienungsrolle 20 zusammenarbeiten. In die Mutter 19 greift eine Gewindespindel 21 ein, durch deren Drehen sie in radial nach außen verlaufenden Führungen 22 verschiebbar gelagert wird.

In Fig. 3 sind die zuletzt beschriebenen Teile genauer zu erkennen. Jeder Winkelhebel 18 setzt sich aus zwei Hebelarmen 18a, 18b zusammen. Während der Hebelarm 18a ein Anlaufstück 24 trägt, ist am Hebelarm 18b ein Spannelement 25 befestigt, welches aus einem zylinderförmigen bzw. einer topfförmigen Hülse 25a, einem in dieser Hülse 25a geführten Kolben 25b und zwischen der Stirnfläche der Hülse 25a und einer im Durchmesser größeren Bedienungsfläche 26 des Kolbens 25b angeordneten Tellerfedern 25c besteht, wobei letztere den Kolben 25b nach außen zu drücken versuchen. Die Führungsfläche des Anlaufstückes 24 und die Führungsfläche 26 des Kolbens 25a bilden zueinander einen spitzen Winkel. Zwischen beiden bzw. im Schwenkbereich derselben ist die auf der Mutter 19 gelagerte Bedienungsrolle 20 angebracht. Die Mutter 19 arbeitet, wie bereits erwähnt, mit einer radial nach außen geführten Gewindespindel 21 zusammen, die in einem Axiallager 27 und Radiallagern 28 derart geführt wird, daß sie sowohl radiale als auch in beiden Richtungen wirkende axiale Kräfte aufnehmen kann. Damit der Raum 14 öldicht bleibt, ist die Gewindespindel 21 mit Dichtungen 29, 30 versehen und weist außerhalb derselben einen Vierkant 31 zur Betätigung auf.

Die linke Hälfte der Fig. 3 zeigt die Mutter 19 in ihrer unteren Endstellung, in der die Bedienungsrolle 20 auf die Bedienungsfläche 26 des Kolbens 25b drückt, wodurch das Werkstück eingespannt wird. In der rechten Hälfte der Fig. 3 befindet sich die Mutter 19 in ihrer oberen Endlage, in der die Klemmbacken 4 (Fig. 1) vom Werkstück abgehoben sind.

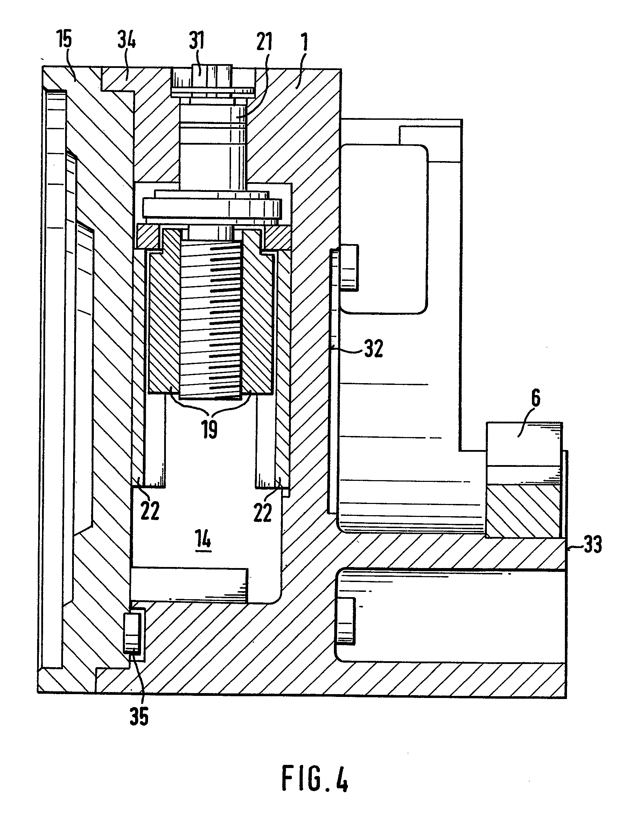

Gemäß Fig. 4 befindet sich die Mutter 19 in ihrer oberen Endstellung. Deutlich sind ihre Führungen 22 zu erkennen. An der dem Werkstück zugekehrten Seite weist der Spannkopfkörper 1 außerhalb noch Planflächen 32, 33 zum Befestigen von Anschlägen bzw. Lehren auf, damit das Werkstück nur in der gewünschten Lage in die Werkstückauflage 6 eingelegt werden kann. Der den Raum 14 abschließende Deckel 15 ist im Beispiel als runde Scheibe ausgebildet und in einer Zentrierung 34 des Spannkopfkörpers 1 geführt. Damit der Deckel 15 zum Spannkopfkörper 1 auch in Drehrichtung die richtige Lage einnimmt, ist zwischen beiden Teilen 1, 15 schließlich noch eine Paßfeder 35 vorgesehen. Die Ausbildung der äußeren Stirnfläche des Deckels 15 kann unterschiedlich sein, sie richtet sich nach dem Gegenstück, wobei in vorliegendem Falle ein Spezial-Teilkopf vorgesehen ist.

Wirkungsweise :

Soll ein Werkstück in die Vorrichtung eingespannt werden, so sind zunächst die Anlageflächen 4a, 6a der Klemmbacken 4 und der Werkstückauflage 6 der Form des Werkstückes anzupassen und durch die Schrauben 7 an den Einspannarmen 3 bzw. am Spannkörper 1 zu befestigen. Danach wird der Vierkant 31 der Gewindespindel 21 von Hand oder mittels eines entsprechenden Antriebes, vorzugsweise entgegen dem Uhrzeigersinn, gedreht, wobei die Anzahl der notwendigen Umdrehungen am Antrieb festgelegt und abgesichert ist. Hierdurch bewegt sich die Mutter 19 entsprechend der Fig. 3, rechte Hälfte, nach oben. Dadurch gelangen die Bedienungsrollen 20 an die Anlaufstücke 24 und verdrehen über die Hebelarme 18a die Wellen 2 gegensinnig nach außen, wodurch gleichzeitig auch die Einspannarme 3 nach außen schwenken. Nun kann das Werkstück mit Hilfe der an den Planflächen 32, 33 angebrachten Anschläge oder Lehren in der richtigen Lage auf die Werkstückauflage 6 gelegt werden.

Danach dreht man den Vierkant 31 und damit die Gewindespindel 21 im Uhrzeigersinn, wodurch sich die Mutter 19 nach unten bewegt. Die Bedienungsrollen 20 geben die Anlaufstücke 24 frei, gelangen an die Führungsflächen 26 der Kolben 25b und drücken über diese und die ungespannten Tellerfedern 25c die topfförmigen Teile 25a nach unten, wodurch über die Winkelhebel 18b die Wellen 2 und damit die Einspannarme 3 soweit verschwenkt werden, bis die Anlageflächen 4a der Klemmbacken 4 am Werkstück anliegen und sich nicht weiter schließen können (Fig. 1). Nun wird die Gewindespindel 21 weiter im Uhrzeigersinn gedreht und der Kolben 25b entgegen der Kraft der Tellerfedern 25c in den topfförmigen Teil hineingedrückt. Hierdurch erreicht man die zum Festhalten des Werkstückes erforderliche Vorspannung. Die Vorspannung wird am nicht dargestellten Antrieb für die Gewindespindel 21 begrenzt. Nach Abnehmen dieses Antriebes bleibt das Werkstück festgespannt, da das Gewinde der Gewindespindel 21 selbsthemmend ausgebildet ist. Nun kann die Drehbewegung des gesamten Systems mit dem eingespannten Werkstück und damit die Bearbeitung des beispielsweise bei Kurbelwellen in Bearbeitungsposition befindlichen Kurbellagerzapfens beginnen.

**Ansprüche**

1. Vorrichtung zum Einspannen von Werkstücken in Werkzeugmaschinen, insbesondere zum Einspannen von Kurbelwellen in Schleifmaschinen oder Drehbänke, welche in einem Spindelstock gelagert oder an einem Teilkopf befestigt ist und zur Aufnahme sowie zum Einspannen des Werkstückes bzw. des endseitigen Kurbelwellenzapfens einen Spannkopfkörper (1) aufweist, in welchem zwei parallel zu seiner Längsmittelachse in gleichem Abstand von dieser verlaufende, jedoch einander gegenüberliegend angeordnete Wellen (2) gelagert sind, an denen außerhalb der dem Werkstück zugekehrten Stirnfläche des Spannkopfkörpers (1) je ein schwenkbarer, mit auswechselbaren Klemmbacken (4) versehener Einspannarm (3) befestigt ist, und bei welchem in gleicher Ebene mit den Klemmbacken (4) eine Werkstückauflage (6) auswechselbar am Spannkopfkörper (1) angebracht ist, dadurch gekennzeichnet, daß die Wellen (2) in einem im Spannkopfkörper (1) vorgesehenen, abgeschlossenen und mit Öl gefüllten Raum (14) Übertragungsmittel (24, 25) aufweisen, durch die sie über eine ausserhalb vom Spannkopfkörper (1) betätigbare, jedoch in dem abgeschlossenen Raum (14) angeordnete, mit einer verschiebbaren Mutter (19) zusammenarbeitende Gewindespindel (21) derartig verschwenkbar sind, daß die Klemmbacken (4) in der einen Endstellung der Mutter (19) vom Werkstück abgehoben und in der anderen Endstellung der Mutter (19) mit Vorspannung gegen das Werkstück angepreßt sind.

2. Vorrichtung nach Anspruch 1, dadurch gekennzeichnet, daß die am Werkstück zur Anlage kommenden Flächen (6a, 4a) der Werkstückauflage (6) und der Klemmbacken (4) genau der Form des einzuspannenden Werkstückes bzw. des Kurbelwellenzapfens angepaßt und etwa gleichmäßig über seinen Umfang verteilt, vorzugsweise jedem Klemmbacken (4) ein Teil der Werkstückauflage (6) gegenüberliegend, angeordnet sind.

3. Vorrichtung nach den Ansprüchen 1 und 2, dadurch gekennzeichnet, daß an zwischen den Enden der Einspannarme (3) vorgesehenen Anschlägen (8) eine die Schließlage der Klemmbacken (4) anzeigende Schließlehre (9) vorgesehen ist.

4. Vorrichtung nach Anspruch 1, dadurch gekennzeichnet, daß die an jeder Welle (2) im abgeschlossenen Raum (14) befestigten Übertragungsmittel (24, 25) aus einem mit einem Hebelarm (18b) verbundenen, federnd ausgebildeten Spannelement (25) und einem an einem zweiten Hebelarm (18a) angebrachten Anlaufstück (24) bestehen, daß Führungsflächen (26) des Spannelementes (25) und des Anlaufstückes (24) in einem spitzen Winkel zueinander verlaufen, und daß zwischen den beiden Führungsflächen eine drehbar an der Mutter (19) befestigte Bedienungsrolle (20) durch Bewegen der Mutter (19) verschiebbar angeordnet ist, so daß sie abwechselnd mit je einer der Führungsflächen zusammenarbeitet.

5. Vorrichtung nach Anspruch 1, dadurch gekennzeichnet, daß der Hebelarm (18b) des Spannelementes (25) und der Hebelarm (18a) des Anlaufstückes (24) als ein auf der Welle (2) befestigter Winkelhebel ausgebildet sind.

6. Vorrichtung nach den Ansprüchen 1 und 4, dadurch gekennzeichnet, daß das Spannelement (25) aus einem topfförmigen Teil (25a), einem in dem topfförmigen Teil (25a) längsverschiebbar geführten Kolben (25b) und den Kolben (25b) und damit die Führungsfläche (26) des Spannelementes (25) nach außen drückenden Federelementen (25c) besteht.

7. Vorrichtung nach Anspruch 6, dadurch gekennzeichnet, daß die Federelemente (25c) als Tellerfedern ausgebildet und in Längsrichtung zwischen einer Anschlagfläche am Kolben (25b) und der Stirnfläche des topfförmigen Teiles (25a) um den Kolben herum angeordnet sind.

8. Vorrichtung nach Anspruch 1, dadurch gekennzeichnet, daß die Gewindespindel (21) in radialer Richtung im abgeschlossenen Raum (14) des Spannkopfkörpers (1) angeordnet ist und außerhalb des Spannkopfkörpers (1) einen Bedienungsvierkant (31) aufweist, und daß die Mutter (19) in zwei Führungen (22) längsverschiebbar gelagert ist.

9. Vorrichtung nach den Ansprüchen 1 und 8, dadurch gekennzeichnet, daß die Gewindespindel (21) über den Bedienungsvierkant (31) von Hand mittels eines Schlüssels drehbar ist.

10. Vorrichtung nach den Ansprüchen 1 und 8, dadurch gekennzeichnet, daß die Gewindespindel (21) über den Bedienungsvierkant (31) durch einen aufsetzbaren Antrieb drehbar ist.

11. Vorrichtung nach den Ansprüchen 1, 4 8 und 10, dadurch gekennzeichnet, daß am Antrieb Grentztaster bzw. Grenzanschläge zum Begrenzen der Vorspannkraft für das Spannelement (25) sowie des maximalen Schwenkweges für das Anlaufstück (24) vorgesehen sind.

12. Vorrichtung nach Anspruch 1, dadurch gekennzeichnet, daß außerhalb an der dem Werkstück zugekehrten Stirnfläche des Spannkopfkörpers (1) an diesen Planflächen (32, 33) zum Befestigen von Anschlägen und Lehren vorgesehen sind.

13. Vorrichtung nach Anspruch 1, dadurch gekennzeichnet, daß der Spannkopfkörper (1) an der dem Teilkopf bzw. dem Spindelstock zugewandten Stirnfläche einen den Raum (14) abschließenden Deckel (15) aufweist, der in einer Zentrierung (34) geführt und durch eine Paßfeder (35) gegen Drehen gesichert ist, und daß die freie Stirnfläche des Deckels (15) dem Antriebsteil angepaßt ist.

## Claims

1. An apparatus for clamping of workpieces in machine tools, especially for clamping of crankshafts in grinding machines or lathes, which is journalled in a spindle stock or secured to an indexing head and which comprises a face plate (1) for receiving and clamping the workpiece and the terminal crankpin, respectively, in which face plate (1) are disposed two shafts (2) extending in parallel to and equidistantly from the longitudinal center axis thereof but being disposed opposite one another, to each of which is secured externally of the endface of the face plate (1) facing the workpiece a pivotable clamping arm (3) provided with an exchangeable clamping jaw (4) and in which a workpiece support in the same plane as the clamping jaws (4), is exchangeably secured to the face plate (1), characterized in that shafts (2) in a closed and oil-filled space (14) provided in said face plate (1) include transmission means (24, 25) through which via a threaded spindle (21) actuatable externally of said face plate (1) but disposed inside said closed space (14) and cooperating with a displaceable nut (19) are so tiltable that the clamping jaws (4) in the one end position of the nut (19) are raised by the workpiece and in the other end position of the nut (19) are urged against the workpiece under initial stress.

2. An apparatus according to claim 1, characterized in that the faces (6a, 4a) of the workpiece support (6) and the clamping jaws (4) that get into engagement with the workpiece exactly conform to the shape of the workpiece or crankpin to be clamped and are approximately uniformly distributed along the circumference thereof with, preferably, a part of the workpiece support (6) being located opposite each clamping jaw (4).

3. An apparatus according to claims 1 and 2, characterized in that provided on abutments (8) disposed between the ends of the clamping arms (3) is a closing gauge (9) indicating the closing position of the clamping jaws (4).

4. An apparatus according to claim 1, characterized in that the transmission means (24, 25) secured to each shaft (2) in the closed space (14) are comprised of a flexibly formed clamping element (25) connected to a lever arm (18b), and an abutment member (24) connected to a second lever arm (18a), that guiding faces (26) of said clamping element (25) and of said abutment member (24) extend at an acute angle to one another, and that provided between the two guiding faces is an operating roll (20) rotatably secured to nut (19) which is displaceable by movement of nut (19) such that it alternately cooperates with respectively one of the guiding faces.

5. An apparatus according to claim 1, characterized in that the lever arm (18b) of the clamping element (25) and the lever arm (18a) of the abutment member (24) are formed as an angular lever secured to shaft (2).

6. An apparatus according to claims 1 and 4, characterized in that the clamping element (25) comprises a cup-shaped part (25a), a piston (25b) guided in longitudinally displaceable manner in said cup-shaped part (25a) and spring elements (25c) urging outwardly the piston (25b) and, hence, the guiding face (26) of the clamping element (25).

7. An apparatus according to claim 6, characterized in that the spring elements (25c) are formed as Belleville springs and are longitudinally arranged between an abutment face on piston (25b) and the front face of the cup-shaped part (25a) about the piston.

8. An apparatus according to claim 1, characterized in that the threaded spindle (21), in radial direction, is disposed in the closed space (14) of the face plate (1) and externally of the face plate (1) has an operating square (31), and that the nut (19) is longitudinally displaceable in two guides (22).

9. An apparatus according to claims 1 to 8, characterized in that the threaded spindle (21) *via* the operating square (31) by means of a key is manually rotatable.

10. An apparatus according to claims 1 and 8, characterized in that the threaded spindle (21) *via* the operating square (31) is rotatable by means of an attachable drive.

11. An apparatus according to claims 1, 4, 8 and 10, characterized in that limit sensors and limit stops, respectively, are provided on the drive for limiting the initial stress for the clamping element (25) and of the maximum pivot distance for the abutment member (24).

12. An apparatus according to claim 1, characterized in that provided externally of the front face of the face plate (1) facing the workpiece are planar faces (32, 33) for securing of stops and gauges.

13. An apparatus according to claim 1, characterized in that the face plate (1) on the front face facing the indexing head and the spindle stock, respectively, includes a cover (15) closing the space (14) which is guided in a centering device (34) and locked against rotation by way of a key (35), and that the free front face of cover (15) conforms to the drive part.

**Revendications**

1. Dispositif de serrage de pièces à usiner dans des machines-outils, particulièrement de serrage de l'arbre-manivelle dans des machines à rectifier ou tours, disposé dans une poupée porte-broche ou fixé à un appareil diviseur et qui comporte un élément (1) de tête à serrage pour recueillir et serrer la pièce à usiner respectivement le tourillon au bout de l'arbre-manivelle, dans lequel élément (1) sont disposés deux arbres (2) s'étendant parallèlement à l'axe central longitudinal à distance égale de laquelle mais disposés vis-à-vis l'un à l'autre, auquel arbre est fixé extérieurement de la face d'élément (1) tournée vers la pièce à usiner respectivement un bras de serrage (3) pivotant et prévu avec une mâchoire (4) échangeable, et dans lequel est prévu au même plan comme les mâchoires (4) un support (6) de pièce à usiner dans une manière échangeable sur l'élément de la tête à serrage (1) caractérisé par le fait que les arbres (2) dans un espace (14) prévu dans l'élément de la tête à serrage (1) fermé et rempli avec de l'huile, comportent des moyens de transmission (24, 25) par l'intermédiaire desquels ils sont pivotants par une broche filetée (21) actionnée extérieurement de l'élément de la tête à serrage mais disposée dans l'espace (14) fermé et coopérante avec un écrou (15) déplaçable de sorte que les mâchoires (4) dans l'une position finale de l'écrou (19) sont enlevées de la pièce à usiner et dans l'autre position finale de l'écrou (19) sont repoussées contre la pièce à usiner avec de la tension initiale.

2. Dispositif selon la revendication 1, caractérisé par le fait que les surfaces (6a, 4a) du support (6) de la pièce à usiner et des mâchoires (4) s'appliquant à la pièce à usiner précisément se conforment à la forme de la pièce à serrer respectivement du tourillon d'arbre-manivelle et sont distribuées sur sa périphérie dans une manière à peu près uniforme et, de préférence, sont disposées de sorte qu'une partie de support (6) de la pièce à usiner se trouve vis-à-vis chaque mâchoire.

3. Dispositif selon les revendications 1 et 2, caractérisé par le fait qu'une jauge de fermeture (9) indiquant la position de fermeture des mâchoires (4) est prévue entre les extrémités des bras à serrer (3).

4. Dispositif selon la revendication 1, caractérisé par le fait que les moyens (24, 25) de transmission fixés à chaque arbre (2) dans l'espace (14) fermé sont composés d'un élément à serrage (25) relié à un bras levier (18b) sous forme élastique et d'une pièce d'arrêt (24) prévue à un deuxième bras levier (18a), que des surfaces guides (26) de l'élément à serrage (25) et de la pièce d'arrêt (24) s'étendent à un angle aigu, et qu'une poulie de manœuvre (20) fixée rotativement à l'écrou (19) est disposée entre les deux surfaces guides dans une manière déplaçable par mouvement de l'écrou (19) de sorte qu'elle coopère alternativement avec respectivement l'une des surfaces guides.

5. Dispositif selon la revendication 1, caractérisé par le fait que le bras levier (18b) de l'élément à serrage (25) et le bras levier (16a) de la pièce d'arrêt (24) sous forme d'un levier angulaire sont fixés à l'arbre (2).

6. Dispositif selon les revendications 1 et 4, caractérisé par le fait que l'élément à serrage (25) est composé d'une partie (25a) sous forme de pot, d'un piston (25b) déplaçable en sens longitudinal dans la partie (25a) sous forme de pot, et des éléments à ressorts (25c) repoussant le piston (25b) et ainsi la surface guide (26) de l'élément à serrage (25) à l'extérieur.

7. Dispositif selon la revendication 6, caractérisé par le fait que les éléments de ressorts (25c) sous forme de ressorts Bellville sont disposés en sens longitudinal entre une surface d'arrêt sur piston (25b) et la surface de la partie (25a) sous forme de pot autour du piston.

8. Dispositif selon la revendication 1, caractérisé par le fait que la broche filetée (21) en sens radial est disposée dans l'espace (14) fermé de l'élément à serrage et comporte à l'extérieur de l'élément à serrage (1) un carré de manœuvre (31) et que l'écrou (15) est disposé dans deux guides (22) dans une manière déplaçable en sens longitudinal.

9. Dispositif selon les revendications 1 et 8, caractérisé par le fait que la broche filetée (21) peut être tournée manuellement par une clé par l'intermédiaire d'un carré de manœuvre (31).

10. Dispositif selon les revendications 1 et 8, caractérisé par le fait que la broche filetée (21) par une commande montable peut être tournée par l'intermédiaire d'un carré de manœuvre (31).

11. Dispositif selon les revendications 1, 4, 8 et 10, caractérisé par le fait que des palpeurs limites respectivement des arrêts limites pour limiter la force de tension initiale pour l'élément à serrage (25) et le chemin pivotant maximum pour la pièce d'arrêt (24) sont prévus sur la commande.

12. Dispositif selon la revendication 1, caractérisé par le fait que des surfaces planes (32, 33) pour fixer des arrêts et jauges sont prévues extérieurement à la face de l'élément de la tête à serrage (1) tournée vers la pièce à usiner.

13. Dispositif selon la revendication 1, caractérisé par le fait que l'élément de la tête à serrage sur la face tournée vers l'appareil diviseur respectivement à la poupée porte-broche comporte un couvercle (15) fermant l'espace (14), qui est conduit dans un ensemble de centrage (34) et bloqué contre rotation par un ressort d'ajustage (35), et que la face libre du couvercle (15) se conforme à la partie de commande.

FIG.1

FIG.2

FIG.3

FIG.4